# EUROPEAN PATENT SPECIFICATION

(11) **EP 3 208 199 B1**
(45) Date of publication and mention of the grant of the patent: **29.01.2020**
(21) Application number: 16290041.9
(22) Date of filing: 22.02.2016
(51) Int. Cl.: B64G 1/00, B64G 1/24, B64G 1/26, B64G 1/40, B64G 1/62, B64G 1/64, B64G 1/10

(54) **DEVICE FOR CONTROLLING CHANGE OF AN ORBIT OF A SPACE OBJECT IN SPACE OR REMOVAL OF A SPACE OBJECT FROM SPACE AND SYSTEM AND METHOD FOR CHANGING AN ORBIT OF A SPACE OBJECT IN SPACE OR FOR REMOVING A SPACE OBJECT FROM SPACE**
VORRICHTUNG ZUR STEUERUNG DER ÄNDERUNG EINER UMLAUFBAHN EINES WELTRAUMOBJEKTS IM WELTRAUM ODER ZUR BESEITIGUNG EINES WELTRAUMOBJEKTS AUS DEM WELTRAUM UND SYSTEM UND VERFAHREN ZUR ÄNDERUNG EINER UMLAUFBAHN EINES WELTRAUMOBJEKTS IM WELTRAUM ODER ZUR BESEITIGUNG EINES WELTRAUMOBJEKTS AUS DEM WELTRAUM
DISPOSITIF, PROCÉDÉ ET SYSTÈME POUR COMMANDER UN CHANGEMENT D'ORBITE OU LE RETRAIT DE L'ESPACE D'UN OBJET

(43) Date of publication of application: 23.08.2017
(73) Proprietor: Airbus Defence and Space GmbH, 82024 Taufkirchen (DE)
(72) Inventor: Voigt, Philipp, 78462 Konstanz (DE); Alary, Didier, 31130 Balma (FR)
(74) Representative: Schicker, Silvia

(56) References cited:
- WO-A2-2010/126604
- US-A1- 2014 042 275
- US-A1- 2014 158 830
- SCHONENBORG R A C: "Solid Propellant De-orbiting for Constellation Satellites", PROCEEDINGS OF THE 4TH INTERNATIONAL SPACECRAFT PROPULSION CONFERENCE (ESA SP-555). 2-9 JUNE, 2004, CHIA LAGUNA (CAGLIARI), SARDINIA, ITALY, , 2 June 2004 (2004-06-02), pages 1-6, XP002669966, Retrieved from the Internet: URL:http://adsabs.harvard.edu/full/2004ESA SP.555E..82S [retrieved on 2012-02-20]
- JANOVSKY R ET AL: "End-Of-Life De-Orbiting Strategies for Satellites", MOTTO: LUFT- UND RAUMFAHRT - SCHMELZTIEGEL DER DISZIPLINEN / DEUTSCHER LUFT- UND RAUMFAHRTKONGRESS 2002, STUTTGART, 23. BIS 26. SEPTEMBER 2002. DEUTSCHE GESELLSCHAFT FÜR LUFT- UND RAUMFAHRT - LILIENTH , 23 September 2002 (2002-09-23), pages 1-10, XP002669967, Retrieved from the Internet: URL:http://www.dlr.de/Portaldata/55/Resour ces/dokumente/sart/dglr-2002-028.pdf [retrieved on 2012-02-20]

## Description

The present application is directed to a device for controlling change of an orbit of a space object in space or removal of a space object from space and a system and a method for changing an orbit of a space object in space or for removing a space object from space. Changing an orbit of a space object in space is also referred to in the following as 're-orbiting' and removing a space object from space as 'de-orbiting'. For the present application, the term 're-orbiting' is not meant to be limited to increasing the orbit altitude. Rather, 're-orbiting' is meant to also cover the case where the orbit altitude is decreased.

The Inter Agencies space Debris Coordination Committee prescribes that a generic space vehicle must be manoeuvred at the end of its working mission so as to prevent it interfering with other space systems in orbit and, in the case of artificial satellites in low orbits, their re-entry in the atmosphere must be guaranteed within 25 years of the end of their working life.

Therefore, there is a general need to provide useful devices capable of safely de-orbiting, i.e., moving towards earth, or re-orbiting, i.e., moving from one orbit to another, space objects in orbit that have reached the end of their working life or are no longer used in the current orbit for other reasons, in a reliable and desired manner.

Document US 2014/0158830 A1 already describes a device for moving or removing artificial satellites. Said device is coupled to a space satellite before the satellite is launched, is independent thereof and has the purpose of re-orbiting said satellite or returning it to earth. It includes a controller for controlling the device, an on-board propulsion system operatively connected to the controller, a receiver for receiving control signals operatively connected to the control means, a powering system for electrically powering the device and a coupler for mechanically coupling the device with the satellite before the satellite is launched. During the working life of the satellite the device remains in a waiting state. At the end of the satellite's working life, the device-integrated propulsion system is enabled by the controller upon receipt of control signals for de-orbiting the satellite or re-orbiting the satellite so as to transfer it to a given (cemetery) orbit.

The present application is directed to the object to increase the flexibility of and reduce the costs for reliably de- or re-orbiting space objects.

Said object is solved by the device as defined in claim 1, a system as defined in claim 11 and a method as defined in claim 12.

The device of the present application for controlling de- or re-orbiting of space objects in a reliable and desired manner is to be coupled to a space object on ground, i.e., before launching the space object. In this context 'in a reliable and desired manner' means that, after a given time after its de- or re-orbiting has been initiated, the space object finally is at a place it is intended to be, i.e., either back on earth or in another orbit in space. For the present application, a space object may be any object to be launched from earth to space, such as, for example, a space craft, a satellite or an upper stage of a launcher, wherein said listing is not to be regarded exhaustive. When coupled to and launched to space with the space object, the device is adapted to control change of the orbit of the space object or removal of the space object from space, when it is respectively actuated. The device operates independently of said space object it is coupled to. This means that the device has its own control, but may share other sources, such as energy, for example, with the space object it is coupled to in space. In other words, the device may at least partially use the power supply of the space object. For example, the device may use sub-systems of the space object to get power, such as the space object's solar cells and/or its batteries. Alternatively, the device may completely rely on a power sub-system of its own. Thereby, the device may control a de- or re-orbiting of the space object even in case of malfunction of the space object itself, i.e., for example, when a space object's controller and/or propulsion system do no longer work in a reliable and controllable manner.

Besides its on-board control means, the device therefore comprises an on-board power sub-system so as to be adapted to function not only independently of a space object's control but also independently of the space object's power supply. The device further comprises a casing for housing the on-board control means and the on-board power sub-system. Further components such as, for example, communication means and/or a signal receiver may be housed in the casing. The casing is provided with a first interface for attachment to the space object and at least one second interface for attachment to means for changing an orbit. Such orbit-changing means closer referred to in the following provide the energy for de- or re-orbiting of the space object. In other words, the modular device itself does not comprise any means for changing an orbit and, especially, is not adapted to provide the energy necessary for de- or re-orbiting itself. As an example, the device itself does not comprise any propulsion means. Rather, such orbit-changing means are to be coupled to the modular device via its at least one second interface.

The device may comprise communication means separate from communication means of the space object the device is coupled to in space, the communication means adapted to communicate in space with other space objects or remote stations, such as a control station on earth. Said communication means may be of known kind and, for example, such as commonly provided in a spacecraft. Preferably, the communication means allow the exchange of commands and signals.

Via the device's first interface, an exchange of commands and/or signals may also be possible between the device and the space object the device is coupled to.

In space, the on-board control means may be adapted to control means for changing an orbit attached to the device via the at least one second interface. Therefore, the control means may be operatively connected to the orbit-changing means via the at least one second interface.

The first interface provides for mechanical connection to the space object the device is to be coupled to such that the device is adapted to be launched from earth as part of the space object.

It is further preferred that the first interface not only provides for mechanical connection of the device to the space object but also provides for electrical connection to the space object. Thereby, it is possible to provide electrical power from the space object to the device and vice versa.

The at least one second interface may provide for mechanical connection to means for changing an orbit such that also said orbit-changing means are adapted to be launched from earth as part of the space object. It is for example conceivable that an orbit-changing means when coupled to the device is adapted to be activated, controlled during operation, i.e., when activated, and/or deactivated mechanically via the second interface. One possible example for such an orbit-changing means adapted to be mechanically activated is a drag sail. In this regard, the device may comprise a mechanic control mechanism which allows the on-board control of the device to activate, control and/or deactivate the orbit-changing means attached via the second interface in space. In view of the above, a mechanical connection between the device and the orbit-changing means via the device's second interface is sufficient to allow control of de- or re-orbiting of the space craft.

A mechanical connection between the device and the orbit-changing means via the device's second interface may also be sufficient to allow control of de- or re-orbiting of the space craft for the case an orbit-changing means when attached to the device is activatable via pyrotechnics. There may be only a one-time activation possibility of the orbit-changing means by pyrotechnics via the second interface. However, if there is a repeated activation possibility by pyrotechnics via the second interface, an orbit-changing means attached thereto preferably comprises a time-out control so as to automatically deactivate itself after a predetermined time of operation, i.e., after a predetermined time the orbit-changing means is activated.

It is however preferred that the at least one second interface not only provides for mechanical connection of the device to the orbit-changing means but also provides for electrical connection to the means for changing an orbit. Thereby, electric power necessary to activate, control during operation, i.e., when activated, and/or deactivate the orbit-changing means coupled to the device may be provided by the on-board power sub-system of the device or may even be provided by a power supply of the space object the device is coupled to through the device via its first and at least one second interfaces. It is for example conceivable that, provided that the space object is still properly working, power for controlling a re-orbiting of the space object is provided by the power supply of the space object and power for controlling a re-orbiting to a graveyard orbit or de-orbiting of the space object at the end of its working life is provided by the device-internal power sub-system.

The at least one second interface is for example adapted for attachment to at least one of the group comprising: a propulsion system, a drag sail, a drag balloon, electrodynamic tethers. The latter is a non-exhaustive listing of orbit-changing means to be attached to the device via its second interface.

Advantageously, the first interface and/or the at least one second interface are standardized interfaces which allow for the coupling of the device to all space objects on the one hand and for the coupling of the device to all orbit-changing means on the other hand.

The device may further comprise a receiver for receiving control signals. The receiver may form part of the communication means. The receiver preferably is operatively connected to the on-board control means so as to allow the on-board control means to control the device and/or orbit-changing means connected to the device in accordance with the received control signals. Control signals for controlling the device and/or the orbit-changing means may be received from the space object via the first interface. Such internally forwarded control signals may be generated within the space object by its on-board control or a watchdog of the space object, monitoring the working life cycle of the space object, or such signals may be received by the space object from an external transmitter, for example from a remote control station or another space object. For receiving external control signals, i.e., control signals not forwarded through the first interface or internally generated, the device may further comprise an antenna coupled to the receiver, the antenna adapted to receive control signals for example from a remote control station, another space object or from the space object the device is coupled to. Instead of a space object's watch dog or additionally thereto, as a fallback, the device may comprise a watchdog monitoring the working life cycle of the space object the device is coupled to in space. For a device comprising a watchdog, the receiver is optional. In fact, the receiver may be replaced by the watchdog so that the watchdog directly forwards its output signals to the device's on-board control means.

The on-board control means preferably are adapted to activate the device upon a received activation signal and/or, when the device is already activated, to deactivate the device again upon a received deactivation signal. When non-activated or deactivated again, the device is in a standby mode waiting for activation.

More specifically, control signals to the on-board control means could be to activate, control during operation, i.e., when activated, or, when activated, to deactivate the orbit-changing means. Control during operation is meant to be control of an activated orbit-changing means attached to the device in space, such as, by way of example, control of a propulsion system attached to the device in space to give more or less boost. It is also conceivable that control signals to the on-board control means regulate a power supply from the on-board power supply of the space object the device is coupled to in space to the device.

The on-board control means may be an on-board computer.

Due to its second interface being connectable to different known orbit-changing means, different technologies for orbit changes can be attached making the device universally applicable and flexible. Especially when the device's interfaces are standardized, the production costs may be reduced to a minimum.

A further aspect of the present application is a system to be coupled to a space object on ground before launching the space object from earth to space. When coupled to a space object, the system is adapted to change an orbit of the space object in space or remove the space object from space. The system is independent with respect to the space object it is coupled to and comprises a device as described in the foregoing as well as means for changing an orbit attached to at least one second interface of said device. Examples of said orbit-changing means have been given above. 'Independent' here has the same meaning as above defined with reference to the device with respect to the space object it is coupled to.

A still further aspect of the present application is a method for changing an orbit of a space object or for removing a space object from space. The method comprises the steps of attaching a device as described in the foregoing with its first interface to a space object on ground, attaching means for changing an orbit, examples of which have been given above, to at least one second interface of said device on ground, activating the device in space, and controlling the orbit-changing means attached to the activated device via the at least one second interface so as to change the orbit of the space object or remove the space object from space.

Said method may further comprise the step of controlling and/or deactivating the device in space again.

Advantages of the above-described device, system and method are inter alia that
- the re- or de-orbiting of the space object is controlled by the device independently of the space object it is coupled to, thus, also enabling re- or de-orbiting in case of malfunction of the space object,
- re-orbiting may be performed more than once before the space object is optionally finally de-orbited, wherein the energy for controlling the re- or de-orbiting may be either provided by the on-board power sub-system of the device or by a power supply of the space object the device is coupled to, provided that said power supply is still intact, and wherein control signals to re- or de-orbit the space object may be sent from components comprised by the space object coupled to the device in space, provided that its controller or internal watchdog is still intact, by any remote control station, or by a watchdog of the device itself,
- the reliability of a re- or de-orbiting of the space object is increased due to the self-sufficient modular device coupled in-between the space object and the orbit-changing means, and
- the overall manufacturing costs for said device are relatively low due its modularity and standardized interfaces.

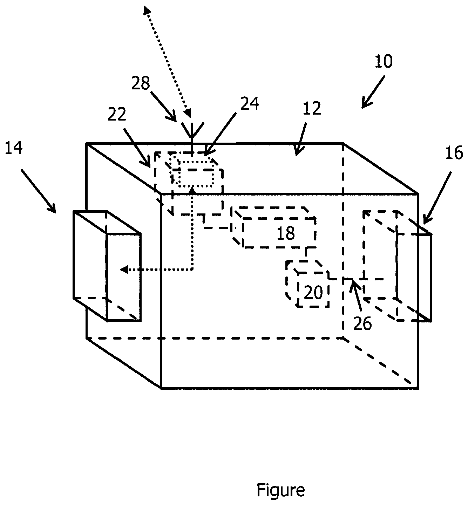

Further characteristics and advantages of the above-described device, the system comprising the same and the method using the same will become apparent from the following detailed description of a preferred embodiment, a non-limiting example of which is illustrated in the attached figure representing a schematic view of a device in accordance with the present application, the device to be coupled to a space object on ground before launching the space object from earth to space and adapted to control change of an orbit of the space object in space or removal of the space object from space.

The figure shows a modular device 10 having a casing 12 provided with a first and a second interface 14, 16 at opposed sides of the casing 12. For use the device 10 is coupled via its first interface 14 to a space object (not shown) and via its second interface 16 to commonly known means for changing an orbit of the space object (also not shown).

The shape and scale of the casing 12 when considered alone or relative to the interfaces 14, 16 is not limited to the one shown. The same applies to the shape and scale of the interfaces 14, 16 when considered alone, relative to one another or relative to the casing 12. Also the relative arrangement of the first and the second interface 14, 16 on opposed sides of the casing 12 as shown in the figure is only exemplary but not limiting.

Internal to the casing 12 are control means 18, a power sub-system 20 and communication means 22 comprising a signal receiver 24. The signal receiver 24 is coupled to an antenna 28 attached to the casing 12.

The communication means 22 are adapted for communicating in space, with other space objects or with remote stations, such as a control station on earth, by exchanging commands and/or signals. Via the first interface 14, an exchange of commands and/or signals is also possible between the device and the space object the device is coupled to. The directions of command and/or signal exchange between the device and the space object the device is coupled to and/or another space object or remote stations are indicated by double tip arrows. Incoming signals are received by the signal receiver 24 either via the antenna 28 or the device's first interface 14.

The on-board control means in the shown embodiment is realized as an on-board computer 18 adapted to control in space the means for changing an orbit (not shown) attached to the device 10 via the second interface 16. The computer 18 is operatively connected to the orbit-changing means (not shown) by an electrical connection 26 via the second interface 16. Thereby, the electrical power necessary to control the operation of the orbit-changing means (not shown) coupled to the device 10 may be provided by the on-board power sub-system 20 of the device 10.

The first interface 14 may provide for mechanical connection to the space object the device 10 is to be coupled to such that the device 10 is adapted to be launched from earth as part of the space object.

There may also be an electrical connection (not shown) from the device 10 to the space object (not shown) via the first interface 14 for providing electrical power from the space object to the device 10 or vice versa. In this case, the electrical power necessary to control the operation of the orbit-changing means (not shown) coupled to the device 10 may even be provided by a power supply of the space object the device 10 is coupled to via the first and second interfaces 14, 16 of the device 10 and an electrical connection through the device 10.

The second interface 16 may provide for mechanical connection to means for changing an orbit (not shown) such that also said orbit-changing means are adapted to be launched from earth together with the space object.

For example, a propulsion system, a drag sail, a drag balloon or electrodynamic tethers may be connected to the device 10 via its second interface 16.

As shown in the figure, the first and second interfaces 14, 16 are standardized interfaces which allow for the coupling of the device 10 to all space objects on the one hand and for the coupling of the device 10 to all orbit-changing means on the other hand.

The receiver 24 is operatively connected to the on-board control means 18 so as to allow the on-board control means 18 to control the device 10 and/or orbit-changing means connected to the device 10 in accordance with the received control signals.

The on-board control means 18 are especially adapted to control activation of the device 10 from its standby mode upon the receiver 24 receiving an activation signal. The orbit-changing means (not shown) attached to the device 10 are then controlled to re- or de-orbit the space object. When the device 10 is already activated, i.e., in operating mode, the control means 18 are adapted to control deactivation of the device 10 again upon the receiver 24 receiving a deactivation signal. The orbit-changing means are then deactivated again. The device 10 then returns to its standby mode waiting for further control signals.

## Claims

1. Modular device (10) configured to be coupled in-between a space object and means for changing an orbit on ground before launching the space object from earth to space, the device (10) adapted to control change of an orbit of the space object in space or removal of the space object from space without itself comprising means for changing an orbit, wherein the device (10) is independent with respect to said space object and comprises:
on-board control means (18);
an on-board power sub-system (20); and
a casing (12) for housing the on-board control means (18) and the on-board power sub-system (20), the casing (12) provided with:
a first interface (14) for attachment to the space object; and
at least one second interface (16) for attachment to the means for changing an orbit.

2. The device (10) of claim 1 further comprising communication means (22) independent of the space object.

3. The device (10) of claim 1 or 2, wherein the on-board control means (18) are adapted to control the means for changing an orbit attached to the device (10) via the at least one second interface (16).

4. The device (10) of any one of claims 1 to 3, wherein the first interface (14) provides for mechanical connection to the space object such that the device (10) is adapted to be launched from earth as part of the space object.

5. The device (10) of claim 4, wherein the first interface (14) also provides for electrical connection to the space object.

6. The device (10) of any one of claims 1 to 5, wherein the at least one second interface (16) provides for mechanical connection to the means for changing an orbit such that also said orbit-changing means are adapted to be launched from earth as part of the space object.

7. The device (10) of claim 6, wherein the at least one second interface (16) also provides for electrical connection to the means for changing an orbit.

8. The device (10) of any one of claims 1 to 7, wherein the at least one second interface (16) is adapted for attachment to at least one of the group comprising: a propulsion system, a drag sail, a drag balloon, electrodynamic tethers.

9. The device (10) of any one of claims 1 to 8, wherein the first interface (14) and/or the at least one second interface (16) are standard interfaces.

10. The device (10) of any one of claims 1 to 9 further comprising a receiver (24) for receiving control signals, the receiver (24) operatively connected to the on-board control means (18).

11. System to be coupled to a space object on ground before launching the space object from earth to space, the system adapted to change an orbit of the space object in space or remove the space object from space, wherein the system is independent with respect to said space object and comprises a modular device (10) according to one of claims 1 to 10 and means for changing an orbit attached to at least one second interface (16) of the device (10).

12. Method for changing an orbit of a space object or for removing a space object from space, the method comprising:
- attaching a modular device (10) according to one of claims 1 to 10 with its first interface (14) to a space object on ground;
- attaching means for changing an orbit to at least one second interface (16) of said device (10) on ground;
- activating the device (10) in space; and
- controlling the orbit-changing means attached to the activated device (10) via the at least one second interface (16) so as to change the orbit of the space object or remove the space object from space.

13. Method of claim 12 further comprising the step of controlling and/or deactivating the device (10) in space again.

## Patentansprüche

1. Modulare Vorrichtung (10), die konfiguriert ist, am Boden zwischen ein Weltraumobjekt und Mittel zum Ändern einer Umlaufbahn gekoppelt zu werden, bevor das Weltraumobjekt von der Erde in den Weltraum gestartet wird, wobei die Vorrichtung (10) dazu eingerichtet ist, die Änderung einer Umlaufbahn des Weltraumobjekts im Weltraum oder das Entfernen des Weltraumobjekts aus dem Weltraum zu steuern, ohne selbst Mittel zum Ändern einer Umlaufbahn zu umfassen, wobei die Vorrichtung (10) bezüglich des Weltraumobjekts unabhängig ist und umfasst:
bordeigene Steuermittel (18);
ein bordeigenes Stromversorgungssubsystem (20); und
ein Gehäuse (12) zum Aufnehmen der bordeigenen Steuermittel (18) und des bordeigenen Stromversorgungssubsystems (20), wobei das Gehäuse (12) umfasst:
eine erste Schnittstelle (14) zur Befestigung an dem Weltraumobjekt; und
mindestens eine zweite Schnittstelle (16) zur Befestigung an den Mitteln zum Ändern einer Umlaufbahn.

2. Vorrichtung (10) nach Anspruch 1, die ferner von dem Weltraumobjekt unabhängige Kommunikationsmittel (22) umfasst.

3. Vorrichtung (10) nach Anspruch 1 oder 2, wobei die bordeigenen Steuermittel (18) dazu eingerichtet sind, die über die mindestens eine zweite Schnittstelle (16) an der Vorrichtung (10) befestigten Mittel zum Ändern einer Umlaufbahn zu steuern.

4. Vorrichtung (10) nach einem der Ansprüche 1 bis 3, wobei die erste Schnittstelle (14) eine mechanische Verbindung mit dem Weltraumobjekt vorsieht, so dass die Vorrichtung (10) dazu eingerichtet ist, als Teil des Weltraumobjekts von der Erde gestartet zu werden.

5. Vorrichtung (10) nach Anspruch 4, wobei die erste Schnittstelle (14) auch eine elektrische Verbindung mit dem Weltraumobjekt vorsieht.

6. Vorrichtung (10) nach einem der Ansprüche 1 bis 5, wobei die mindestens eine zweite Schnittstelle (16) eine mechanische Verbindung mit den Mitteln zum Ändern einer Umlaufbahn vorsieht, so dass auch die Mittel zum Ändern einer Umlaufbahn dazu eingerichtet sind, als Teil des Weltraumobjekts von der Erde gestartet zu werden.

7. Vorrichtung (10) nach Anspruch 6, wobei die mindestens eine zweite Schnittstelle (16) auch eine elektrische Verbindung mit den Mitteln zum Ändern einer Umlaufbahn vorsieht.

8. Vorrichtung (10) nach einem der Ansprüche 1 bis 7, wobei die mindestens eine zweite Schnittstelle (16) zur Befestigung an einem Antriebssystem, einem Schleppsegel, einem Schleppballon und/oder elektrodynamischen Haltegurten eingerichtet ist.

9. Vorrichtung (10) nach einem der Ansprüche 1 bis 8, wobei die erste Schnittstelle (14) und/oder die mindestens eine zweite Schnittstelle (16) Standardschnittstellen ist/sind.

10. Vorrichtung (10) nach einem der Ansprüche 1 bis 9, die ferner einen Empfänger (24) zum Empfangen von Steuersignalen umfasst, wobei der Empfänger (24) funktionsfähig mit den bordeigenen Steuermitteln (18) verbunden ist.

11. System, das am Boden mit einem Weltraumobjekt gekoppelt werden soll, bevor das Weltraumobjekt von der Erde in den Weltraum gestartet wird, wobei das System dazu eingerichtet ist, eine Umlaufbahn des Weltraumobjekts im Weltraum zu ändern oder das Weltraumobjekt aus dem Weltraum zu entfernen, wobei das System bezüglich des Weltraumobjekts unabhängig ist und eine modulare Vorrichtung (10) nach einem der Ansprüche 1 bis 10 und Mittel zum Ändern einer Umlaufbahn umfasst, die an mindestens einer zweiten Schnittstelle (16) der Vorrichtung (10) befestigt sind.

12. Verfahren zum Ändern einer Umlaufbahn eines Weltraumobjekts oder zum Entfernen eines Weltraumobjekts aus dem Weltraum, wobei das Verfahren umfasst:
- Befestigen einer modularen Vorrichtung (10) nach einem der Ansprüche 1 bis 10 mit ihrer ersten Schnittstelle (14) an einem Weltraumobjekt auf dem Boden;
- Befestigen von Mitteln zum Ändern einer Umlaufbahn an mindestens einer zweiten Schnittstelle (16) der Vorrichtung (10) am Boden;
- Aktivieren der Vorrichtung (10) im Weltraum; und
- Steuern der an der aktivierten Vorrichtung (10) über die mindestens eine zweite Schnittstelle (16) befestigten Umlaufbahnwechselmittel, um die Umlaufbahn des Weltraumobjekts zu ändern oder das Weltraumobjekt aus dem Weltraum zu entfernen.

13. Verfahren nach Anspruch 12, das ferner den Schritt des erneuten Steuerns und/oder des erneuten Deaktivierens der Vorrichtung (10) im Weltraum umfasst.

## Revendications

1. Dispositif modulaire (10) configuré pour être couplé entre un objet spatial et des moyens pour un changer une orbite au sol avant de lancer l'objet spatial dans l'espace depuis la terre, le dispositif (10) étant adapté pour commander le changement d'une orbite de l'objet spatial dans l'espace ou le retrait de l'objet spatial de l'espace sans qu'il ne comprenne lui-même des moyens pour changer une orbite, le dispositif (10) étant indépendant dudit objet spatial et comprenant :
des moyens de commande embarqués (18) ;
un sous-système d'alimentation embarqué (20) ; et
un boîtier (12) pour loger les moyens de commande embarqués (18) et le sous-système d'alimentation embarqué (20), le boîtier (12) comportant :
une première interface (14) pour fixation à l'objet spatial ; et
au moins une seconde interface (16) pour fixation aux moyens pour changer une orbite.

2. Dispositif (10) selon la revendication 1, comprenant en outre des moyens de communication (22) indépendants de l'objet spatial.

3. Dispositif (10) selon la revendication 1 ou 2, dans lequel les moyens de commande embarqués (18) sont adaptés pour commander les moyens pour changer une orbite fixés au dispositif (10) par l'intermédiaire de l'au moins une seconde interface (16).

4. Dispositif (10) selon l'une quelconque des revendications 1 à 3, dans lequel la première interface (14) assure une liaison mécanique à l'objet spatial telle que le dispositif (10) est adapté pour être lancé depuis la terre en tant que partie de l'objet spatial.

5. Dispositif (10) selon la revendication 4, dans lequel la première interface (14) assure également une connexion électrique à l'objet spatial.

6. Dispositif (10) selon l'une quelconque des revendications 1 à 5, dans lequel l'au moins une seconde interface (16) assure une liaison mécanique aux moyens pour changer une orbite telle que lesdits moyens de changement d'orbite sont également adaptés pour être lancés depuis la terre en tant que partie de l'objet spatial.

7. Dispositif (10) selon la revendication 6, dans lequel l'au moins une seconde interface (16) assure également une connexion électrique aux moyens pour changer une orbite.

8. Dispositif (10) selon l'une quelconque des revendications 1 à 7, dans lequel l'au moins une seconde interface (16) est adaptée pour une fixation à au moins un parmi le groupe comprenant : un système de propulsion, une voile de freinage, un ballon de freinage, des câbles d'attache électrodynamiques.

9. Dispositif (10) selon l'une quelconque des revendications 1 à 8, dans lequel la première interface (14) et/ou l'au moins une seconde interface (16) sont des interfaces standards.

10. Dispositif (10) selon l'une quelconque des revendications 1 à 9, comprenant en outre un récepteur (24) pour recevoir des signaux de commande, le récepteur (24) étant relié de manière fonctionnelle aux moyens de commande embarqués (18).

11. Système à accoupler à un objet spatial au sol avant de lancer l'objet spatial dans l'espace depuis la terre, le système étant adapté pour changer une orbite de l'objet spatial dans l'espace ou retirer l'objet spatial de l'espace, le système étant indépendant dudit objet spatial et comprenant un dispositif modulaire (10) selon l'une des revendications 1 à 10 et des moyens pour changer une orbite fixés à au moins une seconde interface (16) du dispositif (10).

12. Procédé pour changer une orbite d'un objet spatial ou retirer un objet spatial de l'espace, le procédé comprenant :
- fixer un dispositif modulaire (10) selon l'une des revendications 1 à 10 avec sa première interface (14) à un objet spatial au sol ;
- fixer des moyens pour changer une orbite à au moins une seconde interface (16) dudit dispositif (10) au sol ;
- activer le dispositif (10) dans l'espace ; et
- commander les moyens de changement d'orbite fixés au dispositif activé (10) par l'intermédiaire de l'au moins une seconde interface (16) de façon à changer l'orbite de l'objet spatial ou retirer l'objet spatial de l'espace.

13. Procédé selon la revendication 12, comprenant en outre l'étape de commande et/ou de désactivation du dispositif (10) dans l'espace encore une fois.
